# EUROPEAN PATENT SPECIFICATION

(11) **EP 3 822 953 B1**
(45) Date of publication and mention of the grant of the patent: **11.09.2024**
(21) Application number: 19382998.3
(22) Date of filing: 13.11.2019
(51) Int. Cl.: G09B 23/28, G09B 23/30

(54) **DEVICE FOR MEDICAL TRAINING AND METHOD FOR MEDICAL TRAINING ASSOCIATED THEREWITH**
VORRICHTUNG ZUM MEDIZINISCHEN TRAINING UND VERFAHREN ZUM MEDIZINISCHEN TRAINING DAMIT
DISPOSITIF DE FORMATION MÉDICALE ET PROCÉDÉ DE FORMATION MÉDICALE ASSOCIÉ

(43) Date of publication of application: 19.05.2021
(73) Proprietor: Corporació Sanitària Parc Taulí, 08208 Sabadell (ES)
(72) Inventor: Ibeas Lopez, Jose, 08960 Sant Just Desvern (ES); Pedrero Coderch, Ricard, 08014 Barcelona (ES); Vallespin Aguado, Joaquim, 08192 Sant Quirze del Vallès (ES); Monill Raya, Núria, 08041 Barcelona (ES); Coderch i Navarro, Sergi, 08025 Barcelona (ES)
(74) Representative: Clarke, Modet y Cía., S.L.

(56) References cited:
- WO-A1-2004/102507
- WO-A1-2008/011675
- US-A1- 2012 082 970
- US-A1- 2015 031 008

## Description

### Field of the invention

The present invention relates to a device for medical training that allows medical students, residents and surgeons, as well as other healthcare professionals, to practice many different medical techniques and procedures, and which is especially intended for acquiring skills in the surgical field, as for example, in the training of vascular access anastomoses creation or vascular access surgical treatment of complications.

The present invention also relates to a method for medical training associated with said device.

### Background of the invention

The performance of medical techniques and procedures, especially in the surgical field, usually requires great ability, continuous practice and wide expertise from the professionals who are responsible for carrying them out.

There are known in the state of the art several medical devices that allow professionals and potential professionals to repeatably carry out some medical techniques and procedures, so as they can get the necessary skills to perform them.

For example, US2013/0078603A1 discloses an arm model apparatus for intravenous injection training. The apparatus is provided with a skin pad configured to be easily detachably mounted on a body of an arm model that imitates a human arm. The skin pad is formed as a triple-layered structure consisting of an epidermal layer, a dermal layer and a subcutaneous fat layer, or as double-layered structure consisting of an outer layer and a subcutaneous fat layer. A blood vessel-imitating tube is formed in the subcutaneous fat layer. The apparatus further comprises a pump drive unit that supplies liquid blood through the blood vessel-imitating tube at the same flow rate as actual blood, so that a learner can feel an injection reaction force while giving an injection to the apparatus. The skin pad and the arm model can be easily attached and detached to and from each other, in order to make the practice easy, to avoid liquid blood leakage, and to increase durability of the apparatus (i.e. its lifespan). Thus, learners can continuously use the arm model apparatus for practicing carrying out intravenous injection and taking blood.

US5839904A discloses another example of such medical devices. In particular, it refers to a phlebotomy training device which is adapted for attachment to a person's arm so that students can practice venipuncture techniques on a live subject. The device is formed as double-layered structure consisting of an artificial skin and a core. The artificial skin is formed of a latex material substantially covering the device. The core comprises a resilient, foam or sponge like material which simulates the puncture resistance of muscle and tissue in the forearm, wherein such material may comprise expanded PVC, plastics, rubber or cellulose. The core incorporates a network of channels wherein resilient tubing is placed to form artificial veins and arteries. The tubing must be capable of withstanding repeated punctures from conventional hypodermic needles while maintaining water tight integrity.

Document US2015/031008 discloses a simulated abdominal wall model for practicing laparoscopic first entry surgical techniques. The model includes a simulated abdominal wall portion captured between two frame elements of a support. The support is connectable to a surgical trainer. Therefore, it is observed in first place, that these devices are limited to the performance of very few specific medical techniques and procedures, and in many cases, basically related with simple clinical applications.

In addition, it should also be noted that the repeatability of performing the training prevails over other factors. More specifically, the layer configuration and the selection of materials focus on durability and reusability, therefore losing some realism.

The object of the present invention is a device for medical training as defined in independent claim 1 and which may be used for a wide range of medical techniques and procedures, especially in the surgical field, by means of a more realistic multi-layered structure on which functionality prevails over durability and reusability.

The object of the present invention is also a method of medical training associated with said device, as defined in independent claim 14

### Description of the invention

The device for medical training of the present invention comprises:
- a skin-simulating outer layer;
- a subcutaneous fat-simulating layer located under the skin-simulating outer layer;
- a fascia-simulating layer, of impermeable character, located under the subcutaneous fat-simulating layer; and
- a first muscle-simulating layer located under the fascia-simulating layer.

Thus, the device is provided with a series of layers imitating the various tissues that can be found in the human anatomy. These layers are formed with materials that imitate in texture and touch the properties of their counterparts. Thus, a greater realism is obtained.

Preferably, the skin-simulating outer layer is made of an addition cure silicone rubber compound, having a feel an appearance similar to the ridged pattern of human skin.

Preferably, the skin-simulating outer layer has a thickness of from 0.5 to 1.5 mm, for an embodiment of the present invention in which the device imitates a human arm. Nonetheless, the thickness of the skin-simulating outer layer may be different (i.e. lower or higher) in other particular cases.

According to a preferred example, the composition of the skin-simulating outer layer comprises an addition cure silicone rubber compound having the following properties; Specific Gravity of 1.08 g/cc (ASTM D-1475), Specific Volume of 25.6 cu.in./ib. (ASTM D-1475), Shore Hardness of 20 A (ASTM D-2240), Tensile Strength of 550 psi (ASTM D-412), Mixed Viscosity of 20000 cps (ASTM D-2393), Pot Life of 25 min (ASTM D-2471), Modulus 100 of 49 psi (ASTM D-412), Elongation at Break of 620% (ASTM D-412), Shrinkage <0.001 in./in. (ASTM D-2566).

Preferably, the subcutaneous fat-simulating layer is made of an addition cure silicone rubber compound. It is preferably a yellow-coloured layer, arranged just below the skin-simulating outer layer, thus imitating the position of subcutaneous fat.

Preferably, the subcutaneous fat-simulating layer has a thickness of from 0.5 to 1.5 mm, for an embodiment of the present invention in which the device imitates a human arm. Nonetheless, the thickness of the subcutaneous fat-simulating layer may be different (i.e. lower or higher) when the device imitates other parts of the human anatomy.

According to a preferred example, the composition of the subcutaneous fat-simulating layer comprises an addition cure silicone rubber compound having the following properties; Specific Gravity of 1.08 g/cc (ASTM D-1475), Specific Volume of 25.6 cu.in./ib. (ASTM D-1475), Shore Hardness of 20 A (ASTM D-2240), Tensile Strength of 550 psi (ASTM D-412), Mixed Viscosity of 20000 cps (ASTM D-2393), Pot Life of 25 min (ASTM D-2471), Modulus 100 of 49 psi (ASTM D-412), Elongation at Break of 620% (ASTM D-412), Shrinkage <0.001 in./in. (ASTM D-2566).

Preferably, the fascia-simulating layer is made of a super-soft addition cure silicone rubber compound. The fascia-simulating layer is preferably a translucent layer.

The fascia-simulating layer increases the realism of performing the training of medical techniques and procedures, especially in the surgical field, as it contributes to simulate a more realistic behaviour of the blood-simulating liquid that may be contained in the device. In particular, it retains the blood-simulating liquid once it is released as a consequence of the training (for example; when cutting a blood vessel-simulating tube), thus creating flooding areas, or areas where the liquid is stagnated, as it would happen in actual practice.

Preferably, the fascia-simulating layer has a thickness of 0.25 to 0.75 mm, for an embodiment in which the device imitates a human arm. Nonetheless, the thickness of fascia-simulating layer may be different (i.e. lower or higher) when the device imitates other parts of the human anatomy.

According to a preferred example, the composition of the fascia-simulating layer comprises a super-soft addition cure silicone rubber compound having the following properties; Specific Gravity of 1.07 g/cc (ASTM D-1475), Specific Volume of 26 cu.in./ib. (ASTM D-1475), Shore Hardness of 00-30 A (ASTM D-2240), Tensile Strength of 200 psi (ASTM D-412), Mixed Viscosity of 3000 cps (ASTM D-2393), Pot Life of 45 min (ASTM D-2471), Modulus 100 of 10 psi (ASTM D-412), Elongation at Break of 900% (ASTM D-412), Shrinkage <0.001 in./in. (ASTM D-2566), Die B Tear Strength of 38 psi (ASTM D-624).

Preferably, the first muscle-simulating layer is made of flexible polyurethane foam. It is preferably a red-coloured layer, arranged just below the fascia-simulating layer.

Preferably, the first muscle-simulating layer has a thickness of 15 to 20 mm, for an embodiment in which the device imitates a human arm. Nonetheless, the thickness of the first muscle-simulating layer may be different (i.e. lower or higher) when the device imitates other parts of the human anatomy.

Preferably, the muscle-simulating layer is split by the fascia-simulating layer for a greater realism of the device. That is, defining a supra muscle-simulating layer and an infra muscle-simulating layer. Therefore, in addition to the first muscle-simulating layer, the device further comprises a second muscle-simulating layer located between the subcutaneous fat-simulating layer and the fascia-simulating layer.

Preferably, the second muscle-simulating layer is made of flexible polyurethane foam. It is preferably a red-coloured layer, arranged just above the fascia-simulating layer.

Preferably, the first muscle-simulating layer has a thickness of 15 to 17 mm and the second muscle-simulating layer has a thickness of from 2 to 3 mm, for an embodiment in which the device imitates a human arm. Nonetheless, the thickness of the first muscle-simulating layer and the second muscle-simulating layer may vary (i.e. being lower or higher) when the device imitates different anatomical regions.

According to a preferred example, the composition of the first muscle-simulating layer and/or the second muscle-simulating layer comprises a polyurethane foam having the following properties; 10 Times Volume Expansion, Specific Gravity of 0.09 g/cc (ASTM D-1475), Specific Volume of 280 cu.in./ib. (ASTM D-1475), Mixed Viscosity of 1000 cps (ASTM D-2393), Pot Life of 35 sec (ASTM D-2471).

The previously mentioned flooding or stagnating effect of the fascia-simulating layer further increases the realism of performing the training of medical techniques and procedures, especially in the surgical field, in combination with the first muscle-simulating layer, or in combination with both the first muscle-simulating layer and the second muscle-simulating layer. This is due to the combination of the impermeable character of the fascia-simulating layer with the porous character of the muscle-simulating layers.

Preferably, the device comprises:
- at least one blood vessel-simulating tube inserted into the first muscle-simulating layer.

Blood vessel-simulating tubes may imitate any component of the circulatory system that transport blood through the human body, such as veins or arteries. Preferably, each blood vessel-simulating tube is made of a super-soft addition cure silicone rubber compound.

Preferably, a blood vessel-simulating tube which imitates a vein or artery of a human arm has a wall thickness of from 0.25 to 1 mm. More specifically, a wall thickness of 0.25 to 0.75 mm for a vein, and a wall thickness of 0.50 to 1 mm for an artery. Nonetheless, the wall thickness of the blood vessel-simulating tube may be different (i.e. lower or higher) when it imitates blood vessels of other parts of the human anatomy.

Preferably, a blood vessel-simulating tube which imitates a vein or artery of a human arm has an outer diameter of from 2 to 7 mm. Nonetheless, the outer diameter of the blood vessel-simulating tube may be different (i.e. lower or higher) when it imitates blood vessels of other parts of the human anatomy.

Preferably, a blood vessel-simulating tube which imitates a vein is made of a translucent blue-coloured tube, whereas a blood vessel-simulating tube which imitates an artery is made of a translucent red-coloured tube. Preferably, each blood vessel-simulating tube comprises:
- at least one proximal end; and
- at least one distal end.

In this way, the blood vessel-simulating tube allows the flowing through it of a liquid injected through one of the ends, in order to imitate its physiological behaviour. The ends may be disposed at different places of the device, in an accessible manner, in order to allow creating vascular accesses at different points.

The blood vessel-simulating tubes may adopt any shape or form, such as Y-shaped, or follow any path, that may be found in the network of blood vessels of the circulatory system.

Preferably, for an embodiment which corresponds to a representation of the radial and humeral anatomy, together with its main vascular bed, the device comprises:
- a first Y-shaped blood vessel-simulating tube inserted into the first muscle-simulating layer at a first distance from the skin-simulating outer layer; and
- a second Y-shaped blood vessel-simulating tube, inversely arranged to the first Y-shaped blood vessel-simulating tube, inserted into the first muscle-simulating layer at a second distance from the skin-simulating outer layer different to the first distance.

The arrangement of crossing Y-shaped blood vessel-simulating tubes, following the distribution in the human body, allows performing the different approaches for creating arteriovenous fistulas. These fistulas can be both native (side-to-side or end-to-side) and prosthetic.

According to a preferred example, the composition of any blood vessel-simulating tube comprises a super-soft addition cure silicone rubber compound having the following properties; Specific Gravity of 1.07 g/cc (ASTM D-1475), Specific Volume of 26 cu.in./ib. (ASTM D-1475), Shore Hardness of 00-30 A (ASTM D-2240), Tensile Strength of 200 psi (ASTM D-412), Mixed Viscosity of 3000 cps (ASTM D-2393), Pot Life of 45 min (ASTM D-2471), Modulus 100 of 10 psi (ASTM D-412), Elongation at Break of 900% (ASTM D-412), Shrinkage <0.001 in./in. (ASTM D-2566), Die B Tear Strength of 38 psi (ASTM D-624).

The structure of the device may adopt different forms and shapes, either conforming a separated tool/apparatus to work on, or forming part of another object, such as a mannequin or artificial limb.

In any case, the device may comprise a support body, solid or rigid enough to ensure the proper placement and immobilisation of the same. The layers and tubes fit inside the support body, either being an integral part of the same (all the device is replaced once it is damaged), or as a consumable element/product that may be replaced by a new one, once the training has been completed, and/or the layers and/or tubes are considerably damaged.

According to a preferred example, the support body is made of rigid polyurethane resin, having the following properties; Shore Hardness D of 70-75, Viscosity of 120-160 mPa.s, Density of 1.04-1.09 g/cm3, Pot Life of 4.5 min (ASTM D-2471).

The device of the present invention is suitable for medical training in general, especially for surgical training, and more specifically for vascular anastomoses creation training or vascular access surgical treatment of complications training.

The present invention also refers to a method for medical training that it comprises using the device for medical training of the present invention, as described above.

Preferably, the method for medical training further comprises one or more of the following steps:
a) cutting one or more layers and/or tubes; and/or
b) stitching, sewing or stapling one or more layers; and/or
c) puncturing one or more tubes; and/or
d) resecting one or more tubes; and/or
e) ligating one or more tubes.

Preferably, the method for medical training comprises the steps of:
a) using the device for medical training of the present invention;
b) cutting the skin-simulating outer layer;
c) cutting the subcutaneous fat-simulating layer;
d) cutting the fascia-simulating layer;
e) cutting the first muscle-simulating layer;
f) severing one or more tubes; and
h) ligating the severed tubes.

Preferably, the method for medical training further comprises the step of:
i) cutting the second muscle-simulating layer after the step c) and before the step d).

Preferably, the method for medical training further comprises the steps of:
j) injecting a blood-simulating liquid into the tubes to make it flow through them during the steps a) to h); and
k) clipping the tubes before step f) to prevent flowing of the blood-simulating liquid after the tubes are severed.

Therefore, the structure of the device makes it possible to reproduce the entire surgical procedure, including the cutting of the different layers, vessel resection, identification and ligation, as well as their clipping and subsequent aspiration of the excess fluid (otherwise it will remain in the cutting area, as occurs in clinical practice). Once these steps have been carried out, the vascular access itself would then be created, true to clinical life as a result of the reliable mechanical behaviour of the veins and arteries under tensile loading. Once the process has ended, the product allows practicing ligation and stitching of the various layers to close the surgical wound.

The present invention also refers to the use of the device of the present invention for medical training.

### Brief description of the drawings

A series of drawings will be described below very briefly which will aid a better understanding of the invention and they expressly relate to two preferred embodiments of the same which are presented as a non-limiting examples thereof.
Figure 1 represents an upper plan view of the device for medical training of the present invention according to a first exemplary embodiment.
Figure 2 represents a longitudinal section of the device along the A-A cut line of Figure 1.
Figure 3 represents a transverse section of the device along the B-B cut line of Figure 1.
Figure 4 represents a transverse section of the device along the C-C cut line of Figure 1.
Figure 5 represents a transverse section of the device of the present invention according to a second exemplary embodiment.
Figure 6 represents a perspective view of the device of the present invention integrated in a support body which imitates an arm.

### Detailed description of the invention

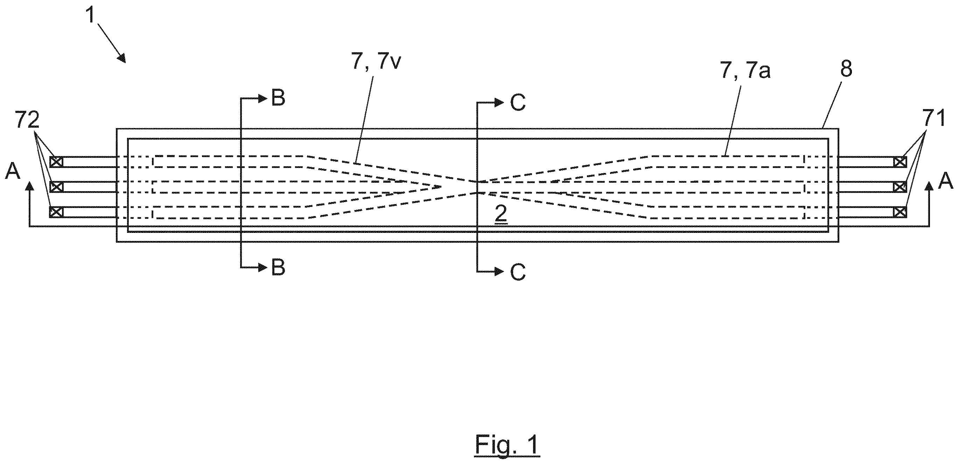

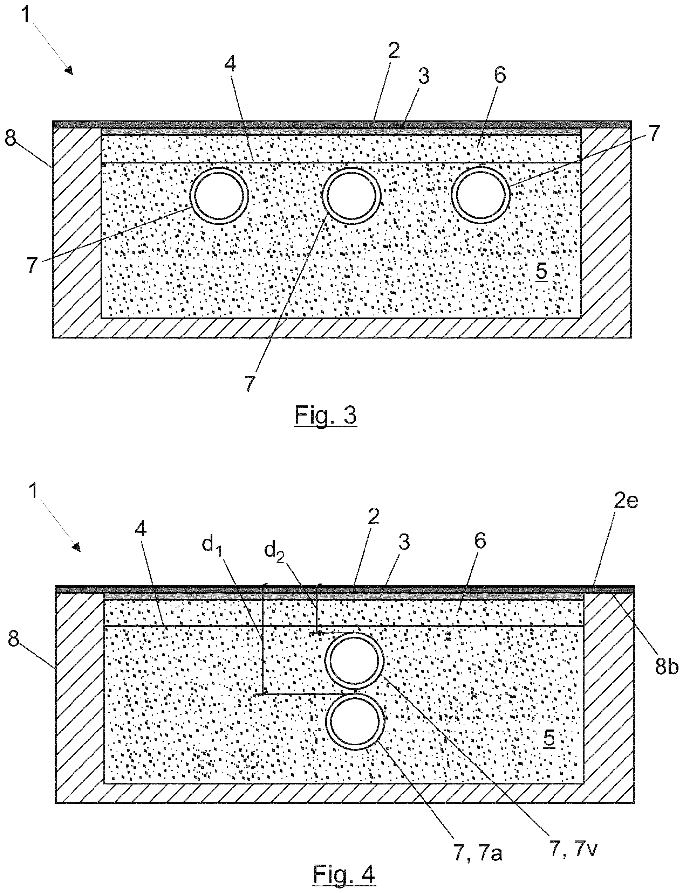

Figures 1 to 4 refer to a first exemplary embodiment of the device (1) for medical treatment of the present invention, which imitates the radial and humeral anatomy of a human arm and its main vascular bed. This device (1) is especially designed for surgical training, and more specifically for vascular anastomoses creation training or vascular access surgical treatment of complications training.

As can be seen in Figures 1 to 4, the device (1) comprises:
- a skin-simulating outer layer (2);
- a subcutaneous fat-simulating layer (3) located under the skin-simulating outer layer (2);
- a fascia-simulating layer (4), of impermeable character, located under the subcutaneous fat-simulating layer (3);
- a first muscle-simulating layer (5) located under the fascia-simulating layer (4), and
- a second muscle-simulating layer (6) located between the subcutaneous fat-simulating layer (3) and the fascia-simulating layer (4).

Therefore, according to the present exemplary embodiment, the fascia-simulating layer (4) is arranged just above the first muscle-simulating layer (5) and just below the second muscle-simulating layer (6).

The skin-simulating outer layer (2) is made of an addition cure silicone rubber compound, having a feel an appearance similar to the ridged pattern of human skin. The skin-simulating outer layer (2) has a thickness of from 0.5 to 1.5 mm.

The subcutaneous fat-simulating layer (3) is made of an addition cure silicone rubber compound. It is preferably a yellow-coloured layer, arranged just below the skin-simulating outer layer (2), thus imitating the position of subcutaneous fat. The subcutaneous fat-simulating layer (3) has a thickness of from 0.5 to 1.5 mm.

The fascia-simulating layer (4) is made of a super-soft addition cure silicone rubber compound. The fascia-simulating layer (4) is preferably a translucent layer. The fascia-simulating layer (4) has a thickness of 0.25 to 0.75 mm.

The first muscle-simulating layer (5) is made of flexible polyurethane foam. It is preferably a red-coloured layer, arranged just below the fascia-simulating layer (4). The first muscle-simulating layer (5) has a thickness of 15 to 17 mm.

The second muscle-simulating layer (6) is made of flexible polyurethane foam. It is preferably a red-coloured layer, arranged just above the fascia-simulating layer (4). The second muscle-simulating layer (6) has a thickness of from 2 to 3 mm.

The device (1) comprises:
- a plurality of blood vessel-simulating tubes (7, 7a, 7v) inserted into the first muscle-simulating layer (5).

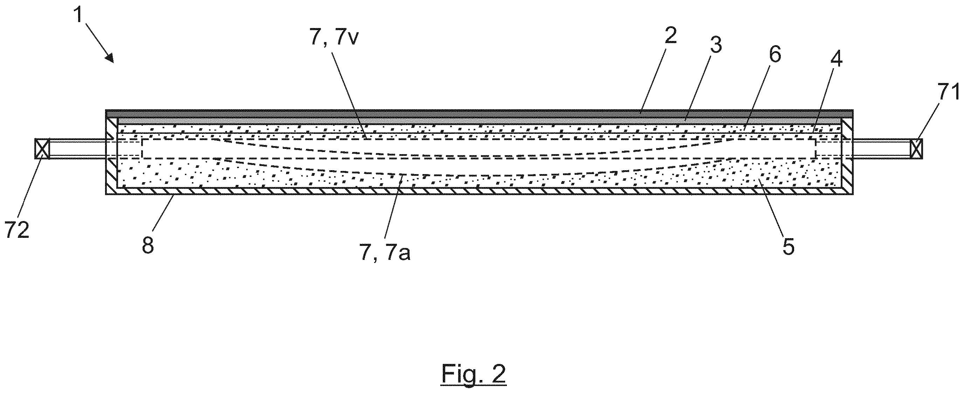

The blood vessel-simulating tubes (7, 7a, 7v) in Figure 1 are illustrated in hidden lines, as they are not externally visible. Figure 2 also shows the blood vessel-simulating tubes (7, 7a, 7v) in hidden lines, as they are embedded in the first muscle-simulating layer (5).

Blood vessel-simulating tubes (7, 7a, 7v) are made of a super-soft addition cure silicone rubber compound. They have a wall thickness of from 0.25 to 1 mm, and an outer diameter of from 2 to 7 mm.

Each blood vessel-simulating tube (7, 7a, 7v) comprises:
- at least one proximal end (71); and
- at least one distal end (72).

In this way, the blood vessel-simulating tubes (7, 7a, 7v) allow the flowing through them of a liquid injected through the ends (71, 72), in order to imitate its physiological behaviour. The ends (71, 72) may be disposed at different places of the device (1), in an accessible manner, in order to allow creating vascular accesses at different points.

The device (1) comprises:
- a first Y-shaped blood vessel-simulating tube (7a) inserted into the first muscle-simulating layer (5) at a first distance (d1) from the skin-simulating outer layer (2); and
- a second Y-shaped blood vessel-simulating tube (7v), inversely arranged to the first Y-shaped blood vessel-simulating tube (7a), inserted into the first muscle-simulating layer (5) at a second distance (d2) from the skin-simulating outer layer (2) different to the first distance (d1).

The first Y-shaped blood vessel-simulating tube (7a) is made of a translucent blue-coloured tube, and it imitates an artery. It presents a deeper placement with respect to a second Y-shaped blood vessel-simulating tube (7v) in the central part of the device (1).

The second Y-shaped blood vessel-simulating tube (7v) is made of a translucent red-coloured tube, and it imitates a vein. It presents a more superficial placement with respect to the first Y-shaped blood vessel-simulating tube (7a) in the central part of the device (1).

The device (1) comprise a rectangular support body (8), solid or rigid enough to ensure the proper placement and immobilisation of the same, wherein the layers (2, 3, 4, 5, 6) and tubes (7, 7a, 7v) fit inside said support body (8).

The skin-simulating outer layer (2) extends perimetrically all around the device (1), defining a perimetrical extension (2e) configured to be fixed to the support body (8). In this case, the perimetrical extension (2e) is fixed upon the upper edge or border (8b) of the support body (8), but in other cases it may partially or totally wrap the support body (8).

The rest of the layers (3, 4, 5, 6) are arranged within the support body (8) one on top of the other, being kept together in contact by the pressure exerted by the skin-simulating outer layer (2), which acts as a covering of all of them.

The present invention also refers to a method for medical training that it comprises using the device (1) for medical training of the present invention, according to the first exemplary embodiment.

The method for medical training further comprises one or more of the following steps:
a) cutting one or more layers (2, 3, 4, 5, 6) and/or tubes (7, 7a, 7v); and/or
b) stitching, sewing or stapling one or more layers (2, 3, 4, 5, 6); and/or
c) puncturing one or more tubes (7, 7a, 7v); and/or
d) resecting one or more tubes (7, 7a, 7v); and/or
e) ligating one or more tubes (7, 7a, 7v).

For vascular anastomoses creation training or vascular access surgical treatment of complications training the method for medical training comprises the steps of:
a) using the device (1) for medical training of the present invention;
b) cutting the skin-simulating outer layer (2);
c) cutting the subcutaneous fat-simulating layer (3);
d) cutting the fascia-simulating layer (4);
e) cutting the first muscle-simulating layer (5);
f) severing one or more tubes (7, 7a, 7v); and
h) ligating the severed tubes (7, 7a, 7v).

The method for medical training further comprises the step of:
i) cutting the second muscle-simulating layer (6) after the step c) and before the step d).

The method for medical training further comprises the steps of:
j) injecting a blood-simulating liquid into the tubes (7, 7a, 7v) to make it flow through them during the steps a) to h); and
k) clipping the tubes (7, 7a, 7v) before step f) to prevent flowing of the blood-simulating liquid after the tubes (7, 7a, 7v) are severed.

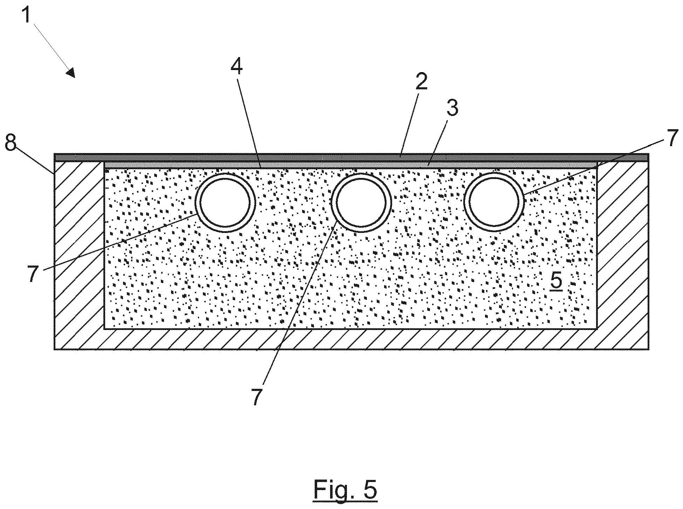

Figure 5 refers to a second exemplary embodiment of the device (1) for medical treatment of the present invention, which imitates the radial and humeral anatomy of a human arm and its main vascular bed. This device (1) is especially designed for surgical training, and more specifically for vascular anastomoses creation training or vascular access surgical treatment of complications training.

As can be seen in Figure 5, in this case, the device (1) does not comprise the second muscle-simulating layer (6). So, the first muscle-simulating layer (5) has a thickness of 15 to 20 mm. The rest of the features are the same as those of the first embodiment.

The method for medical training described for the first exemplary embodiment may be also applied for the second exemplary embodiment without considering the steps that involve the second muscle-simulating layer (6), that is, without considering the step i).

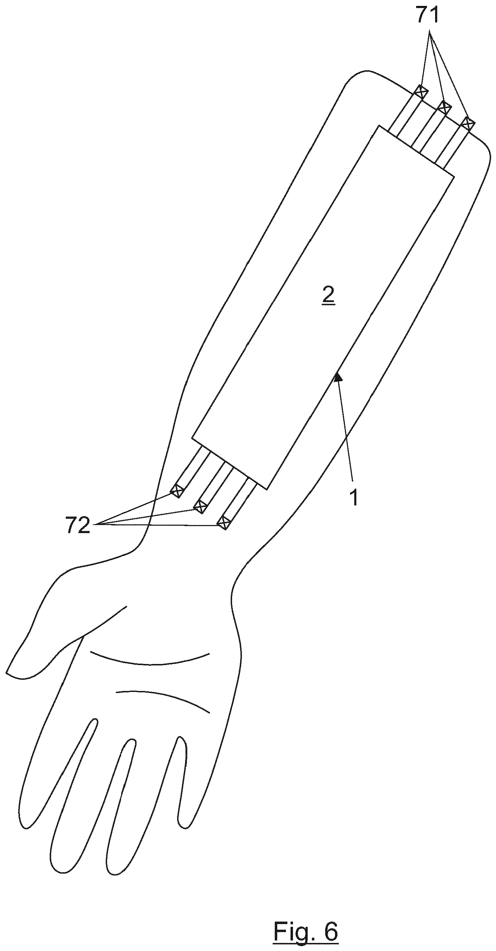

Figure 6 shows the device (1) of the present invention integrated in a support body which imitates an arm.

## Claims

1. A device for medical training, comprising:
• a skin-simulating outer layer (2);
• a subcutaneous fat-simulating layer (3) located under the skin-simulating outer layer (2);
• a fascia-simulating layer (4) located under the subcutaneous fat-simulating layer (3); and
• a first muscle-simulating layer (5) located under the fascia-simulating layer (4);
said device (1) **characterised in that** the fascia-simulating layer (4) has an impermeable character; **and in that** said fascia-simulating layer (4) is made of a super-soft addition cure silicone rubber compound.

2. The device according to claim 1, **characterised in that** it comprises:
• a second muscle-simulating layer (6) located between the subcutaneous fat-simulating layer (3) and the fascia-simulating layer (4).

3. The device according to claim 2, **characterised in that** the second muscle-simulating layer (6) is made of flexible polyurethane foam.

4. The device according to any of claims 1 to 3, **characterised in that** the skin-simulating outer layer (2) is made of an addition cure silicone rubber compound.

5. The device according to any of claims 1 to 4, **characterised in that** the subcutaneous fat-simulating layer (3) is made of an addition cure silicone rubber compound.

6. The device according to any of claims 1 to 5, **characterised in that** the fascia-simulating layer (4) has a thickness of 0.25 to 0.75 mm.

7. The device according to any of claims 1 to 6, **characterised in that** the first muscle-simulating layer (5) is made of flexible polyurethane foam.

8. The device according to any of claims 1 to 7, **characterised in that** it comprises:
• at least one blood vessel-simulating tube (7, 7a, 7v) inserted into the first muscle-simulating layer (5).

9. The device according to claim 8, **characterised in that** the blood vessel-simulating tube (7, 7a, 7v) is made of a super-soft addition cure silicone rubber compound.

10. The device according to any of claims 8 to 9, **characterised in that** the blood vessel-simulating tube (7, 7a, 7v) is Y-shaped.

11. The device according to any of claims 1 to 10, **characterised in that** it comprises:
• a first Y-shaped blood vessel-simulating tube (7a) inserted into the first muscle-simulating layer (5) at a first distance (d1) from the skin-simulating outer layer (2); and
• a second Y-shaped blood vessel-simulating tube (7v), inversely arranged to the first Y-shaped blood vessel-simulating tube (7a), inserted into the first muscle-simulating layer (5) at a second distance (d2) from the skin-simulating outer layer (2) different to the first distance (d1).

12. The device according to any of claims 1 to 11, **characterised in that** it is for surgical training.

13. The device according to any of claims 8 to 11, **characterised in that** is for vascular anastomoses creation training or vascular access surgical treatment of complications training.

14. Method for medical training, **characterised in that** it comprises using a device (1) for medical training according to any of claims 1 to 13.

## Patentansprüche

1. Vorrichtung für medizinisches Training, Folgendes umfassend:
• eine hautsimulierende Außenschicht (2);
• eine subkutanfettsimulierende Schicht (3), die sich unter der hautsimulierenden Außenschicht (2) befindet;
• eine fasziensimulierende Schicht (4), die sich unter der subkutanfettsimulierenden Schicht (3) befindet; und
• eine erste muskelsimulierende Schicht (5), die sich unter der fasziensimulierenden Schicht (4) befindet;
wobei die Vorrichtung (1) **dadurch gekennzeichnet ist, dass** die fasziensimulierende Schicht (4) einen undurchlässigen Charakter aufweist und **dass** die fasziensimulierende Schicht (4) aus einer superweichen, additionsvernetzenden Silicium-Kautschuk-Verbindung hergestellt ist.

2. Vorrichtung gemäß Anspruch 1, **dadurch gekennzeichnet, dass** sie Folgendes umfasst:
• eine zweite muskelsimulierende Schicht (6), die sich zwischen der subkutanfettsimulierenden Schicht (3) und der fasziensimulierenden Schicht (4) befindet.

3. Vorrichtung gemäß Anspruch 2, **dadurch gekennzeichnet, dass** die zweite muskelsimulierende Schicht (6) aus flexiblem Polyurethanschaum hergestellt ist.

4. Vorrichtung gemäß einem der Ansprüche 1 bis 3, **dadurch gekennzeichnet, dass** die hautsimulierende Außenschicht (2) aus einer additionsvernetzenden Silicium-Kautschuk-Verbindung hergestellt ist.

5. Vorrichtung gemäß einem der Ansprüche 1 bis 4, **dadurch gekennzeichnet, dass** die subkutanfettsimulierende Schicht (3) aus einer additionsvernetzenden Silicium-Kautschuk-Verbindung hergestellt ist.

6. Vorrichtung gemäß einem der Ansprüche 1 bis 5, **dadurch gekennzeichnet, dass** die fasziensimulierende Schicht (4) eine Stärke von 0,25 bis 0,75 mm aufweist.

7. Vorrichtung gemäß einem der Ansprüche 1 bis 6, **dadurch gekennzeichnet, dass** die erste muskelsimulierende Schicht (5) aus flexiblem Polyurethanschaum hergestellt ist.

8. Vorrichtung gemäß einem der Ansprüche 1 bis 7, **dadurch gekennzeichnet, dass** sie Folgendes umfasst:
• mindestens ein blutgefäßsimulierendes Rohr (7, 7a, 7v), das in die erste muskelsimulierende Schicht (5) eingeführt ist.

9. Vorrichtung gemäß Anspruch 8, **dadurch gekennzeichnet, dass** das blutgefäßsimulierende Rohr (7, 7a, 7v) aus einer superweichen, additionsvernetzenden Silicium-Kautschuk-Verbindung hergestellt ist.

10. Vorrichtung gemäß einem der Ansprüche 8 bis 9, **dadurch gekennzeichnet, dass** das blutgefäßsimulierende Rohr (7, 7a, 7v) Y-förmig ist.

11. Vorrichtung gemäß einem der Ansprüche 1 bis 10, **dadurch gekennzeichnet, dass** sie Folgendes umfasst:
• ein erstes Y-förmiges blutgefäßsimulierendes Rohr (7a), das in die erste muskelsimulierende Schicht (5) in einem ersten Abstand (d1) von der hautsimulierenden Außenschicht (2) eingeführt ist; und
• ein zweites Y-förmiges blutgefäßsimulierendes Rohr (7v), das umgekehrt zu dem ersten Y-förmigen blutgefäßsimulierenden Rohr (7a) angeordnet ist und in die erste muskelsimulierende Schicht (5) in einem zweiten Abstand (d2) von der hautsimulierenden äußeren Schicht (2) eingeführt ist, der sich von dem ersten Abstand (d1) unterscheidet.

12. Vorrichtung gemäß einem der Ansprüche 1 bis 11, **dadurch gekennzeichnet, dass** sie für chirurgisches Training bestimmt ist.

13. Vorrichtung gemäß einem der Ansprüche 8 bis 11, **dadurch gekennzeichnet, dass** sie für das Training der Herstellung von Gefäßanastomosen oder für das Training der chirurgischen Behandlung von Komplikationen durch Gefäßzugang bestimmt ist.

14. Verfahren für medizinisches Training, **dadurch gekennzeichnet, dass** es die Verwendung einer Vorrichtung (1) zum medizinischen Training gemäß einem der Ansprüche 1 bis 13 umfasst.

## Revendications

1. Dispositif d'entraînement médical comprenant :
• une couche extérieure de simulation de la peau (2) ;
• une couche de simulation de la graisse sous-cutanée (3) située sous la couche externe de simulation de la peau (2) ;
• une couche de simulation du fascia (4) située sous la couche de simulation de la graisse sous-cutanée (3) ; et
• une première couche simulant les muscles (5) située sous la couche simulant le fascia (4) ;
ledit dispositif (1) **caractérisé en ce que** la couche simulant le fascia (4) a un caractère imperméable ; et **en ce que** ladite couche simulant le fascia (4) est faite d'un composé de caoutchouc de silicone super souple à durcissement par addition.

2. Le dispositif selon la revendication 1, **caractérisé en ce qu'**il comprend :
• une deuxième couche de simulation musculaire (6) située entre la couche de simulation de la graisse sous-cutanée (3) et la couche de simulation du fascia (4).

3. Le dispositif selon la revendication 2, **caractérisé en ce que** la seconde couche de simulation musculaire (6) est constituée d'une mousse de polyuréthane flexible.

4. Le dispositif selon l'une des revendications 1 à 3, **caractérisé en ce que** la couche extérieure de simulation de la peau (2) est constituée d'un composé de caoutchouc de silicone durcissant par addition.

5. Le dispositif selon l'une des revendications 1 à 4, **caractérisé en ce que** la couche simulant la graisse sous-cutanée (3) est constituée d'un composé de caoutchouc de silicone à polymérisation par addition.

6. Le dispositif selon l'une des revendications 1 à 5, **caractérisé en ce que** la couche simulant le fascia (4) a une épaisseur de 0,25 à 0,75 mm.

7. Le dispositif selon l'une quelconque des revendications 1 à 6, **caractérisé en ce que** la première couche de simulation musculaire (5) est constituée d'une mousse de polyuréthane flexible.

8. Le dispositif selon l'une quelconque des revendications 1 à 7, **caractérisé en ce qu'**il comprend :
• au moins un tube simulant un vaisseau sanguin (7, 7a, 7v) inséré dans la première couche de simulation musculaire (5).

9. Le dispositif selon la revendication 8, **caractérisé en ce que** le tube simulant les vaisseaux sanguins (7, 7a, 7v) est fabriqué à partir d'un composé de caoutchouc de silicone super souple à polymérisation par addition.

10. Le dispositif selon l'une des revendications 8 à 9, **caractérisé en ce que** le tube simulant les vaisseaux sanguins (7, 7a, 7v) est en forme de Y.

11. Le dispositif selon l'une quelconque des revendications 1 à 10, **caractérisé en ce qu'**il comprend :
• un premier tube simulant les vaisseaux sanguins en forme de Y (7a) inséré dans la première couche simulant les muscles (5) à une première distance (d1) de la couche externe simulant la peau (2) ; et
• un second tube de simulation de vaisseaux sanguins en forme de Y (7v), disposé inversement au premier tube de simulation de vaisseaux sanguins en forme de Y (7a), inséré dans la première couche de simulation musculaire (5) à une seconde distance (d2) de la couche externe de simulation de la peau (2) différente de la première distance (d1).

12. Le dispositif selon l'une des revendications 1 à 11, **caractérisé en ce qu'**il est destiné à l'entraînement chirurgical.

13. Le dispositif selon l'une des revendications 8 à 11, **caractérisé en ce qu'**il est destiné à l'entraînement à la création d'anastomoses vasculaires ou à l'entraînement au traitement chirurgical des complications de l'accès vasculaire.

14. Procédé d'entraînement médical, **caractérisée en ce qu'**il comprend l'utilisation d'un dispositif (1) d'entraînement médical selon l'une des revendications 1 à 13.
